# EUROPEAN PATENT APPLICATION

(11) **EP 2 256 758 A1**
(43) Date of publication of application: **01.12.2010**
(21) Application number: 09722877.9
(22) Date of filing: 17.03.2009
(51) Int. Cl.: H01F 41/02, H01F 1/053, H01F 1/08, H02K 15/03

(54) **PERMANENT MAGNET AND METHOD FOR MANUFACTURING THE SAME**

(30) Priority: 18.03.2008 JP 2008069382
(71) Applicant: Nitto Denko Corporation, Ibaraki-shi Osaka 567-8680 (JP); Toyota Jidosha Kabushiki Kaisha, Toyota-shi, Aichi 471-8571 (JP)
(72) Inventor: OZEKI, Izumi, Ibaraki-shi Osaka 567-8680 (JP); KUME, Katsuya, Ibaraki-shi Osaka 567-8680 (JP); NAKAYAMA, Junichi, Ibaraki-shi Osaka 567-8680 (JP); FUKUDA, Yuuki, Ibaraki-shi Osaka 567-8680 (JP); HOSHINO, Toshinobu, Ibaraki-shi Osaka 567-8680 (JP); HORIO, Tomokazu, Ibaraki-shi Osaka 567-8680 (JP); NAKAMURA, Kenji, Toyota-shi Aichi-ken 471-8571 (JP)
(74) Representative: Grünecker, Kinkeldey, Stockmair & Schwanhäusser Anwaltssozietät
(86) International application number: PCT/JP2009/055191
(87) International publication number: WO 2009/116539

(57) **Abstract**

The present invention relates to a permanent magnet obtained by sintering a green sheet which is produced by mixing a magnet raw material with a resin binder and molding the resulting mixture, and a method for producing the same. Since the present invention has such a constitution, the contraction due to sintering becomes uniform, whereby the deformations such as warpage and depressions do not occur after sintering. Further, it is unnecessary to perform the conventional correcting processing after sintering, which can simplify the production steps, because the pressure unevenness at the time of pressing disappears. Therefore, it becomes possible to mold the permanent magnet with a high degree of dimension accuracy. Furthermore, even when the permanent magnet is reduced in film thickness, the magnetic characteristics are not deteriorated by the processing-deteriorated layer on the surface.

## Description

### TECHNICAL FIELD

The present invention relates to a permanent magnet and a method for producing a permanent magnet.

### BACKGROUND ART

In recent years, a reduction in size and weight, an increase in power and an increase in efficiency have been required for permanent magnet motors used in hybrid vehicles, hard disk drives or the like. In particular, with recent requirement for a reduction in size of hard disk drives, a further reduction in size and thickness has been required for voice coil motors (hereinafter referred to as VCMs) used for head driving of hard disk drives as shown in Patent Document 1 (JP-A 2006-286819).
In realizing the reduction in size and thickness of the above-mentioned VCMs, a reduction in film thickness and further improvement in magnetic characteristics have been required for permanent magnets to be buried in the VCMs. As the permanent magnets, there are ferrite magnets, Sm-Co-based magnets, Nd-Fe-B-based magnets, Sm₂Fe₁₇Nₓ-based magnets, etc.; and in particular, Nd-Fe-B-based magnets having high coercive force are used as the permanent magnets for permanent magnet motors.

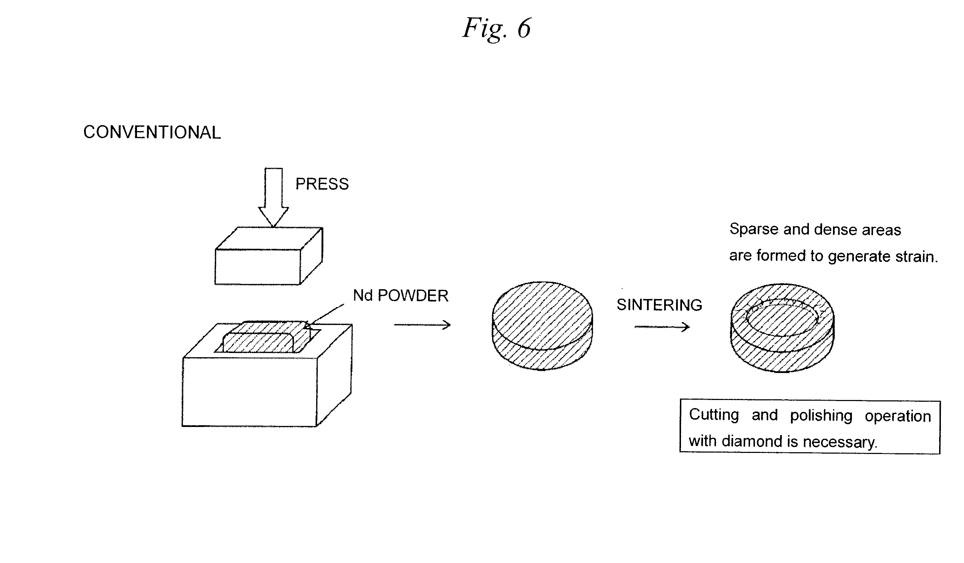

Here, as a method for producing permanent magnets for use in permanent magnet motors, a powder sintering method is generally used. In the powder sintering method for use herein, a raw material is first pulverized with a jet mill (dry pulverization) to produce a magnet powder as shown in Fig. 6. Thereafter the magnet powder is placed in a mold, and press-molded to a desired shape while applying thereto a magnetic field from the outside. Then, the solid magnet powder thus-molded to the desired shape is sintered at a predetermined temperature (for example, 1100°C in the case of the Nd-Fe-B-based magnet), thereby producing the permanent magnet.
Patent Document 1: JP-A 2006-286819 (Page 2, Page 3, Fig. 4)

### DISCLOSURE OF THE INVENTION

However, when the permanent magnet is produced by the above-mentioned powder sintering method, there have been the following problems. That is to say, in the powder sintering method, it is necessary to secure a predetermined porosity in a press-molded magnet powder in order to perform magnetic field orientation. And when the magnet powder having the predetermined porosity is sintered, it is difficult to uniformly perform contraction which occurs at the time of sintering, and deformations such as warpage and depressions occur after sintering. Further, since pressure unevenness occurs at the time of pressing the magnet powder, sparse and dense of the magnet after sintering are formed to generate strain on a surface of the magnet. Conventionally, it has therefore been required to compression-mold the magnet powder to a larger size than that of a desired shape, previously assuming that strain is generated on the surface of the magnet. Then, cutting and polishing operations using a diamond have been performed after sintering to perform processing for correcting to the desired shape. As a result, production steps increase, and there is a possibility of deteriorating qualities of the permanent magnet produced.

Further, particularly in the permanent magnet used in the VCMs as described above, a reduction in film thickness (for example, 1 mm or less in thickness) has been required. And the magnet reduced in film thickness has a large ratio of a processing-deteriorated layer on a surface, which occurs in the case of processing the surface, compared to a thick magnet. Accordingly, when the thin film-like permanent magnet is produced by the above-mentioned powder sintering method, a problem of further deteriorating magnetic characteristics has also been encountered.

The invention has been made in order to solve the above-mentioned conventional problems, and an object of the invention is to provide a permanent magnet, in which the deformations such as warpage and depressions do not occur after sintering, because the contraction due to sintering becomes uniform, further which requires no correcting processing after sintering to be able to simplify the production steps, because the pressure unevenness at the time of pressing disappears, and which is free from degradation of magnetic characteristics even when the permanent magnet is reduced in film thickness, and to provide a method for producing such a permanent magnet.

Namely, the present invention relates to the following items (1) to (6).
(1) A permanent magnet obtained by sintering a green sheet which is produced by mixing a magnet raw material with a resin binder and molding the resulting mixture.
(2) The permanent magnet according to (1), in which the magnet raw material is an Nd-based magnet.
(3) A method for producing a permanent magnet, the method including:
   a step of wet-pulverizing a magnet raw material,
   a step of adding a resin binder to the magnet raw material,
   a step of kneading the magnet raw material and the resin binder to produce a slurry,
   a step of molding the slurry into a sheet form to prepare a green sheet, and
   a step of sintering the green sheet.
(4) A method for producing a permanent magnet, the method including:
   a step of dry-pulverizing a magnet raw material,
   a step of adding a resin binder to the magnet raw material,
   a step of kneading the magnet raw material and the resin binder to produce a slurry,
   a step of molding the slurry into a sheet form to prepare a green sheet, and
   a step of sintering the green sheet.
(5) The method for producing a permanent magnet according to (3), in which the magnet raw material is an Nd-based magnet.
(6) The method for producing a permanent magnet according to (4), in which the magnet raw material is an Nd-based magnet.

According to the permanent magnet having the constitution of the above (1), the permanent magnet is constituted by the magnet produced by sintering a green sheet which is produced by mixing a magnet raw material with a resin binder and molding the resulting mixture. Accordingly, the contraction due to sintering becomes uniform, whereby the deformations such as warpage and depressions do not occur after sintering, and further, it is unnecessary to perform the conventional correcting processing after sintering, which can simplify the production steps, because the pressure unevenness at the time of pressing disappears. Therefore, it becomes possible to mold the permanent magnet with a high degree of dimension accuracy. Furthermore, even when the permanent magnet is reduced in film thickness, the magnetic characteristics are not deteriorated by the processing-deteriorated layer on the surface.

According to the permanent magnet having the constitution of the above (2), it is possible to simplify the production method for an Nd-based magnet capable of especially securing a high coercive force and is possible to mold with a high degree of dimension accuracy.

According to the method for producing a permanent magnet of the above (3), a permanent magnet is produced by adding a resin binder to a wet-pulverized magnet raw material; kneading the magnet raw material and the resin binder to produce a slurry; and sintering a green sheet molded from the slurry produced. Accordingly, the contraction due to sintering becomes uniform, whereby the deformations such as warpage and depressions do not occur after sintering, and further, it is unnecessary to perform the conventional correcting processing after sintering, which can simplify the production steps, because the pressure unevenness at the time of pressing disappears. Therefore, it becomes possible to mold the permanent magnet with a high degree of dimension accuracy. Furthermore, even when preparing a thin-film permanent magnet, the magnetic characteristics are not deteriorated by the processing-deteriorated layer on the surface.

According to the method for producing a permanent magnet of the above (4), a permanent magnet is produced by adding a resin binder to a dry-pulverized magnet raw material; kneading the magnet raw material and the resin binder to produce a slurry; and sintering a green sheet molded from the slurry produced. Accordingly, the contraction due to sintering becomes uniform, whereby the deformations such as warpage and depressions do not occur after sintering, and further, it is unnecessary to perform the conventional correcting processing after sintering, which can simplify the production steps, because the pressure unevenness at the time of pressing disappears. Therefore, it becomes possible to mold the permanent magnet with a high degree of dimension accuracy. Furthermore, even when preparing a thin-film permanent magnet, the magnetic characteristics are not deteriorated by the processing-deteriorated layer on the surface.

According to the method for producing a permanent magnet of the above (5) and (6), it is possible to simplify the production steps for an Nd-based magnet capable of especially securing a high coercive force and is possible to mold with a high degree of dimension accuracy.

### BRIEF DESCRIPTION OF THE DRAWINGS

Fig. 1 is an overall view showing a permanent magnet according to the present embodiment.
Fig. 2 is an enlarged view showing Nd magnet particles constituting a permanent magnet.
Fig. 3 is a graph showing a hysteresis curve of a ferromagnetic body.
Fig. 4 is a schematic view showing a magnetic domain structure of a ferromagnetic body.
Fig. 5 is an explanatory view showing production steps of the permanent magnet according to the present embodiment.
Fig. 6 is an explanatory view showing production steps of a conventional permanent magnet.

### Description of Reference Numerals and Signs

- 1: Permanent Magnet
- 41: Slurry
- 42: Green Sheet

### BEST MODE FOR CARRYING OUT THE INVENTION

A specific embodiment of a permanent magnet and a method for producing a permanent magnet according to the invention will be described in detail hereinunder with reference to the drawings.

### Constitution of Permanent Magnet

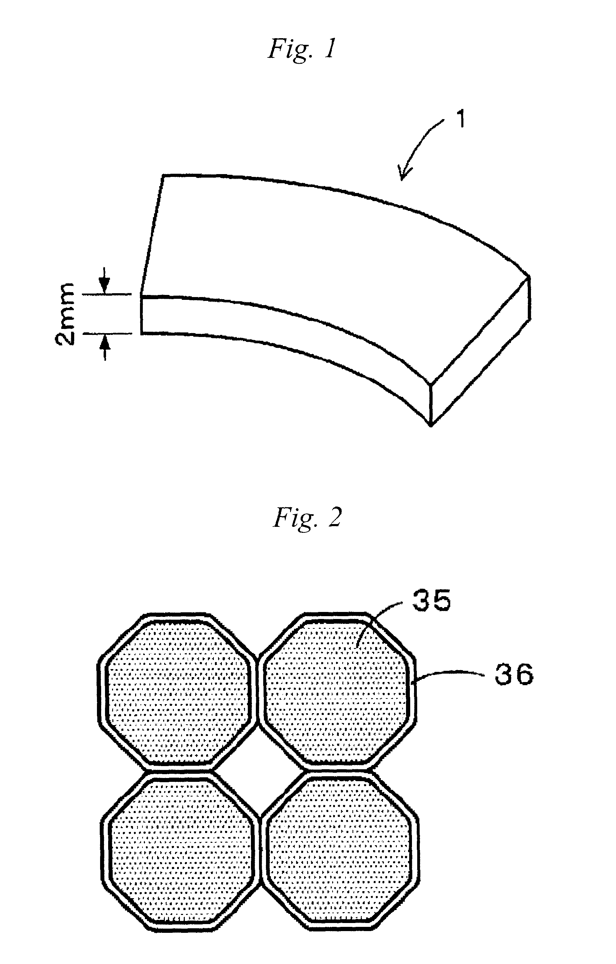

First, a constitution of a permanent magnet 1 will be described using Figs. 1 to 4. In this embodiment, particularly, an explanation is given taking the permanent magnet to be buried in a VCM as an example.
The permanent magnet 1 according to this embodiment is a Nd-Fe-B-based magnet. Further, Dy (dysprosium) for increasing the coercive force of the permanent magnet 1 is added. Incidentally, the contents of respective components are regarded as Nd: 27 to 30 wt%, Dy (or Tb): 0.01 to 8 wt%, B: 1 to 2 wt%, and Fe (electrolytic iron): 60 to 70 wt%. Furthermore, the permanent magnet 1 is constituted from a fan-shaped and thin film-like magnet as shown in Fig. 1. Fig. 1 is an overall view showing the permanent magnet 1 according to this embodiment.

The permanent magnet 1 as used herein is a thin film-like permanent magnet having a thickness of 0.1 to 2 mm (2 mm in Fig. 1), and is prepared by sintering a green sheet molded from a Nd magnet powder in a slurry state as described later.

Further, in the permanent magnet 1 according to this embodiment, the coercive force of the permanent magnet 1 is improved by coating surfaces of Nd magnet particles 35 constituting the permanent magnet 1 with Dy layers 36 as shown in Fig. 2. Fig. 2 is an enlarged view showing the Nd magnet particles constituting the permanent magnet 1.

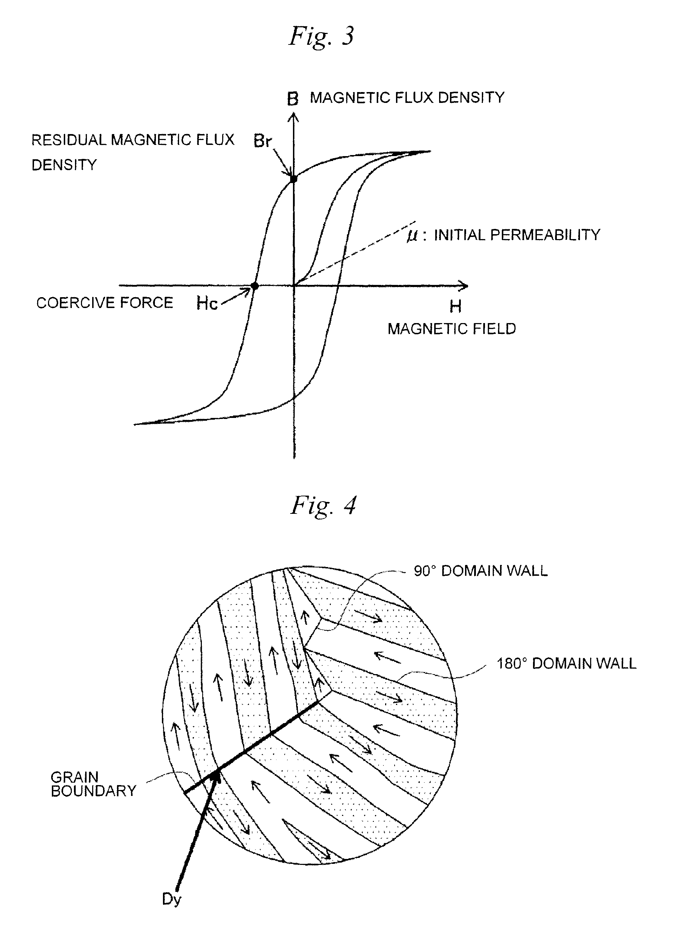

A mechanism of improving the coercive force of the permanent magnet 1 with the Dy layers 36 will be described below using Fig. 3 and Fig. 4. Fig. 3 is a graph showing a hysteresis curve of a ferromagnetic body, and Fig. 4 is a schematic view showing a magnetic domain structure of the ferromagnetic body.
As shown in Fig. 3, the coercive force of the permanent magnet is the intensity of a magnetic field necessary for making magnetic polarization zero (that is to say, for magnetization reversal) when the magnetic field is applied from a magnetized state in the opposite direction. Accordingly, if the magnetization reversal can be inhibited, high coercive force can be obtained. Incidentally, magnetization processes of a magnetic body include rotational magnetization based on rotation of magnetic moment and domain wall displacement in which domain walls (consisting of a 90° domain wall and a 180° domain wall) as boundaries of magnetic domains move.

Here, in this embodiment, when the magnet powder is finely pulverized by wet pulverization as described later, slight amounts (for example, 0.01 to 8 wt% based on the magnet powder (the amount of Dy added based on Nd, being taken as weight conversion of Dy distribution particularly when a Dy compound is added) of the Dy compound and a dispersing agent are added. This causes the Dy compound to be uniformly adhered to the particle surfaces of the Nd magnet particles 35 by wet dispersion to form the Dy layers 36 shown in Fig. 2, when the Dy compound-added magnet powder is sintered thereafter. As a result, Dy is unevenly distributed in a boundary face of the magnet particle as shown in Fig. 4, thereby being able to improve the coercive force of the permanent magnet 1.
Further, in this embodiment, when the green sheet obtained by wet-mixing the Dy compound with the magnet raw material in a solvent is sintered under proper sintering conditions, Dy can be prevented from being diffused and penetrated (solid-solutionized) into the magnet particles 35. Here, it is known that the diffusion and penetration of Dy into the magnet particles 35 decreases the residual magnetization (magnetization at the time when the intensity of the magnetic field is made zero) of the magnet. Accordingly, in this embodiment, the residual magnetization of the permanent magnet 1 can be prevented from being decreased.
Incidentally, the Dy layer 36 is not required to be a layer composed of only the Dy compound, and may be a layer composed of a mixture of Dy and Nd. Further, a Tb (terbium) compound may be added in place of the Dy compound, whereby it becomes possible to similarly improve the residual magnetization of the permanent magnet 1. When Tb is added, layers of the Tb compound are similarly formed on the surfaces of the Nd magnet particles 35, and the residual magnetization of the permanent magnet 1 can be further improved by forming the Tb layers.

### Method for Producing Permanent Magnet

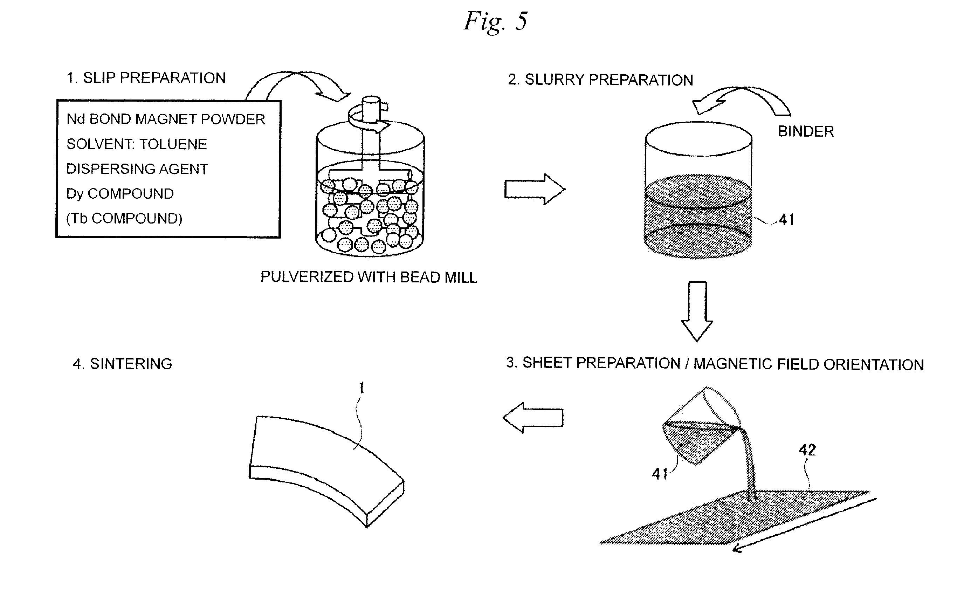

A method for producing the permanent magnet 1 according to this embodiment will be described below using Fig. 5. Fig. 5 is an explanatory view showing production steps of the permanent magnet 1 of this embodiment.

First, an ingot including 27 to 30 wt% of Nd, 60 to 70 wt% of Fe and 1 to 2 wt% of B is produced. Thereafter, the ingot is crudely pulverized to a size of about 200 µm with a stamp mill, a crusher or the like. Then, the crudely pulverized magnet powder is finely pulverized to a size of about 0.3 to 5 µm by a wet method using a bead mill, and the magnet powder is dispersed in a solution to prepare a slip. Incidentally, in the wet pulverization, 4 kg of toluene based on 5 kg of the magnet powder is used as a solvent, and 0.05 kg of a phosphate-based dispersing agent is further added as a dispersing agent. Further, during the wet pulverization, 0.01 to 8 wt% of the Dy compound is added to the magnet powder, thereby dispersing the Dy compound in the solvent together with the magnet powder. Incidentally, detailed dispersing conditions are as follows:
- Dispersing device:: bead mill
- Dispersing medium:: zirconia beads

Here, a substance soluble in the solvent of the slurry is preferably used as the Dy compound added. For example, a Dy-containing organic material, more particularly a dysprosium cation-containing organic acid salt (an aliphatic carboxylate, an aromatic carboxylate, an alicyclic carboxylate, an alkyl aromatic carboxylate or the like), a dysprosium cation-containing organic complex (an acetylacetonate, a phthalocyan complex, a merocyan complex or the like) and an organic metal compound other than the above may be mentioned.
Further, it also becomes possible to uniformly adhere Dy or the Dy compound to the surface of the Nd magnet particle by adding Dy or the Dy compound pulverized into fine particles, at the time of wet dispersion, and uniformly dispersing the fine particles, even when it is insoluble in the solvent.

Furthermore, there is no particular limitation on the solvent used for pulverization, and there can be used an alcohol such as isopropyl alcohol, ethanol or methanol, a lower hydrocarbon such as pentane or hexane, an aromatic compound such as benzene, toluene or xylene, a ketone, a mixture thereof or the like. In particular, isopropyl alcohol or the like is preferred.

After dispersion of the magnet powder, a resin binder is added to and mixed with the slip prepared. Subsequently, the magnet powder and the resin binder are kneaded to produce a slurry 41. Incidentally, a material used as the resin binder is not particularly limited, and may be each of various thermoplastic resin single substances or mixtures thereof, or various thermosetting resin single substances or mixtures thereof. Physical properties, natures and the like of the respective ones may be any, as long as they are within the range in which desired characteristics are obtained. For example, a methacrylic resin may be mentioned.

Subsequently, a green sheet 42 is formed from the slurry 41 produced. A method for forming the green sheet 42 can be performed, for example, by a method of coating a supporting substrate such as a separator as needed with the produced slurry 41 by an appropriate system, followed by drying, or the like. Incidentally, the coating system is preferably a system excellent in layer thickness controllability, such as a doctor blade method. Further, it is preferred that a defoaming treatment is sufficiently performed so that no air bubbles remain in a developed layer, by combined use of a defoaming agent or the like. Incidentally, detailed coating conditions are as follows:
- Coating system:: doctor blade
- Gap:: 1 mm
- Supporting substrate:: silicone-treated polyester film
- Drying conditions:: 130°C×30 min after 90°C×10 min

Further, a pulsed field is applied to the green sheet 42 coated on the supporting substrate, in a direction crossing to a transfer direction, thereby orientating the magnetic field in a desired direction. Incidentally, it is necessary to determine the direction in which the magnetic field is orientated, taking into consideration the magnetic field direction required for the permanent magnet 1 molded from the green sheet 42.

Then, the green sheet 42 formed from the slurry 41 is divided into a desired product shape (for example, in this embodiment, the fan shape shown in Fig. 1). Thereafter, sintering is performed at 1,100°C for about 1 hour. Incidentally, the sintering is performed under an Ar or vacuum atmosphere, and as a result of the sintering, the permanent magnet 1 composed of a sheet-like magnet is produced.

As described in the above, for the permanent magnet 1 and according to the production method for the permanent magnet 1 of this embodiment, a magnet raw material including 27 to 30 wt% of Nd, 60 to 70 wt% of Fe and 1 to 2 wt% of B is wet-pulverized in a solvent, then a resin binder is added to the pulverized magnet powder, the magnet powder and the resin binder are kneaded to produce a slurry 41, and the slurry produced is molded into a sheet form to obtain a green sheet 42, which is sintered to produce the permanent magnet 1. Accordingly, the contraction due to sintering becomes uniform, whereby the deformations such as warpage and depressions do not occur after sintering, and further, it is unnecessary to perform the conventional correcting processing after sintering, which can simplify the production steps, because the pressure unevenness at the time of pressing disappears. Therefore, it becomes possible to mold the permanent magnet 1 with a high degree of dimension accuracy. Furthermore, even when preparing a thin film of the permanent magnet 1, the magnetic characteristics are not deteriorated by the processing-deteriorated layer on the surface.
In addition, the production steps can be simplified for the Nd-based magnet capable of especially securing a high coercive force of rear earth magnets, and the Nd-based magnet can be molded with high dimensional accuracy.

Incidentally, the invention should not be construed as being limited to the above-mentioned example, and various improvements and modifications are of course possible within the range not departing from the gist of the invention. For example, in this embodiment, as the method for dispersing the magnet powder and the Dy compound in the solvent, the crudely pulverized magnet powder is wet-pulverized in the solvent together with the Dy compound, thereby dispersing them in the solvent, as shown in Fig. 5. However, it is also possible to disperse them by the following method.
(1) First, the crudely pulverized magnet powder is finely pulverized to a size of about 0.3 to 5 11m by dry pulverization using a ball mill, a jet mill or the like.
(2) Then, the finely pulverized magnet powder is added to the solvent, and allowed to be uniformly dispersed in the solvent. In that case, the dispersing agent and the Dy compound are also added to the solvent.
(3) The magnet powder and the resin powder dispersed in the solvent are kneaded to produce the slurry 41.
It becomes possible to produce the permanent magnet having the same constitution as in this embodiment by hereinafter performing the same treatment as in this embodiment.

In this embodiment, an ingot of Nd-Fe-B is first pulverized and thereafter a Dy compound is added thereto and dispersed in a solvent to produce a green sheet. Apart from this, however, an ingot of Nd-Fe-Dy-B that previously contains Dy may be pulverized and dispersed in a solvent to produce a green sheet. In such a case, the amount of Dy to be contained in the ingot must be from 20 to 30 wt% based on Nd.

Further, in this embodiment, description is made taking the permanent magnet to be buried in the VCM as an example. However, it is also of course possible to be applied to the permanent magnet buried in a permanent magnet motor such as a vibration motor mounted on a cellular phone, a driving motor mounted on a hybrid car or a spindle motor for rotating a disk of a hard disk drive.

Furthermore, the pulverizing conditions, kneading conditions and sintering conditions of the magnet powder should not be construed as being limited to the conditions described in the above-mentioned example.

In this embodiment, a Dy compound and a dispersing agent are added to the magnet powder in wet-pulverizing the magnet raw material and the Dy compound and the magnet raw material are dispersed in the solvent whereby the Dy compound is unevenly distributed and localized in the grain boundary of the magnet particle so as to enhance the coercive force of the magnet. However, the constitution of adding the Dy compound is not limited thereto but may be any other constitution to realize the same effect of enhancing the coercive force.
For example, the surface of the prepared green sheet 42 may be uniformly coated with a Dy compound. The sintered magnet may be uniformly coated with a Dy compound and then this may be heat-treated. As a result, Dy covers the surface of the sheet magnet and is unevenly distributed thereon, thereby being able to enhance the coercive force of the magnet, and the total amount of Dy may be reduced.

While the invention has been described in detail and with reference to specific embodiments thereof, it will be apparent to one skilled in the art that various changes and modifications can be made therein without departing from the spirit and scope thereof.
This application is based on a Japanese patent application No. 2008-069382 filed March 18, 2008, the entire contents thereof being hereby incorporated by reference.
All the references cited are incorporated herein as a whole.

### INDUSTRIAL APPLICABILITY

According to the present invention, a permanent magnet is constituted by a magnet produced by sintering a green sheet which is produced by mixing a magnet raw material with a resin binder and molding the resulting mixture. Accordingly, the contraction due to sintering becomes uniform, whereby the deformations such as warpage and depressions do not occur after sintering, and further, it is unnecessary to perform the conventional correcting processing after sintering, which can simplify the production steps, because the pressure unevenness at the time of pressing disappears. Therefore, it becomes possible to mold the permanent magnet with a high degree of dimension accuracy. Furthermore, even when the permanent magnet is reduced in film thickness, the magnetic characteristics are not deteriorated by the processing-deteriorated layer on the surface.

## Claims

1. A permanent magnet obtained by sintering a green sheet which is produced by mixing a magnet raw material with a resin binder and molding the resulting mixture.

2. The permanent magnet according to claim 1, wherein the magnet raw material is an Nd-based magnet.

3. A method for producing a permanent magnet, said method comprising:
a step of wet-pulverizing a magnet raw material,
a step of adding a resin binder to the magnet raw material,
a step of kneading the magnet raw material and the resin binder to produce a slurry,
a step of molding the slurry into a sheet form to prepare a green sheet, and
a step of sintering the green sheet.

4. A method for producing a permanent magnet, said method comprising:
a step of dry-pulverizing a magnet raw material,
a step of adding a resin binder to the magnet raw material,
a step of kneading the magnet raw material and the resin binder to produce a slurry,
a step of molding the slurry into a sheet form to prepare a green sheet, and
a step of sintering the green sheet.

5. The method for producing a permanent magnet according to claim 3, wherein the magnet raw material is an Nd-based magnet.

6. The method for producing a permanent magnet according to claim 4, wherein the magnet raw material is an Nd-based magnet.
